# EUROPÄISCHE PATENTSCHRIFT

(11) **EP 3 408 894 B1**
(45) Veröffentlichungstag und Bekanntmachung des Hinweises auf die Patenterteilung: **24.03.2021**
(21) Anmeldenummer: 17702031.0
(22) Anmeldetag: 22.01.2017
(51) Int. Cl.: H01R 9/26, H02B 1/052

(54) **RASTVORRICHTUNG FÜR EINE ELEKTRISCHE BAUGRUPPE UND BAUGRUPPE MIT EINER RASTVORRICHTUNG**
LOCKING MECHANISM FOR AN ELECTRICAL ASSEMBLY, AND ASSEMBLY COMPRISING A LOCKING MECHANISM
DISPOSITIF D'ENCLIQUETAGE POUR UN BLOC ÉLECTRIQUE ET BLOC POURVU D'UN TEL DISPOSITIF D'ENCLIQUETAGE

(30) Priorität: 30.01.2016 DE 202016100467 U
(43) Veröffentlichungstag der Anmeldung: 05.12.2018
(73) Patentinhaber: Hora eTec GmbH, 32257 Bünde (DE)
(72) Erfinder: NIESTRAT, Dirk, 32584 Löhne (DE); HOLTMANN, Ralf, 32257 Bünde (DE)
(74) Vertreter: Werner & ten Brink
(86) Internationale Anmeldenummer: PCT/EP2017/051261
(87) Internationale Veröffentlichungsnummer: WO 2017/129499

(56) Entgegenhaltungen:
- EP-A1- 0 602 305
- DE-U1-202010 013 453
- JP-A- H05 198 332
- US-B1- 6 563 697

## Beschreibung

Die Erfindung betrifft zuvorderst eine Rastvorrichtung für eine elektrische Baugruppe oder ein elektrisches Gerät - im Folgenden zusammenfassend als elektrische Baugruppe bezeichnet. Als elektrische Baugruppe werden Klemmen, Verteilerklemmen oder sonstige elektrische Anschlussvorrichtungen, Sicherungshalter usw., aber auch Schaltgeräte wie Schütze, Motorschutzschalter und dergleichen verstanden. Im Weiteren betrifft die Erfindung auch eine derartige elektrische Baugruppe mit einer Rastvorrichtung.

Bei derartigen Baugruppen ist eine Anbringung in einem Klemmkasten, Verteilerkasten oder einem sogenannten Schaltschrank üblich. Die Anbringung erfolgt auf oder an einer dafür vorgesehenen Trag- oder Montageschiene. Solche Schienen weisen ein für ein lösbares Anbringen (Aufrasten, Entrasten) einer Baugruppe oder einer Mehrzahl von Baugruppen vorgesehenes Profil auf. Ein Beispiel für ein derartiges Profil ist ein sogenanntes Hutprofil einer entsprechend als Hutprofilschiene oder kurz als Hutschiene bezeichneten Tragschiene.

Die Anbringung jeweils einer Baugruppe auf oder an einer solchen Tragschiene erfolgt mittels eines von der jeweiligen Baugruppe umfassten Rastprofils und einer wiederum davon umfassten Rastvorrichtung. Das Rastprofil befindet sich auf einer Unterseite der Baugruppe und umfasst üblicherweise in einem auf die Breite der jeweiligen Tragschiene abgestellten Abstand auf einer Seite ein feststehendes Rastprofil, zum Beispiel in Form zumindest eines starren Rasthakens, und auf einer gegenüberliegenden Seite ein federndes Rastprofil, zum Beispiel in Form zumindest eines federnden Rasthakens. Ein derartiges Rastprofil ist in der DE 20 2010 005 216 U1 mit dem Titel "Elektrische Anschlussvorrichtung" beschrieben.

Wenngleich sich das Rastprofil der DE20 2010 005 216 U1 in der Praxis bewährt hat, besteht noch Verbesserungspotential.

Rastvorrichtungen sind in vielfältiger Form im Stand der Technik bekannt. Beispiele finden sich neben der vorgenannten DE20 2010 005 216 U1 auch in der EP 0 602 305 A1, der US 6,563,697, der JP H05 198332 A und der DE 20 2010 013 453 U1, die eine Rastvorrichtung gemäß dem Oberbegriff des Anspruchs 1 offenbart, sowie der DE 10 2006 030 953 A1.

Eine Aufgabe der vorliegenden Erfindung besteht entsprechend darin, eine weitere Ausführungsform eines Rastprofils, insbesondere eine weitere Ausführungsform einer Rastvorrichtung eines solchen Rastprofils, anzugeben.

Diese Aufgabe wird erfindungsgemäß mittels einer Rastvorrichtung der eingangs genannten Art mit den Merkmalen des Anspruchs 1 gelöst. Dazu ist bei einer Rastvorrichtung für eine elektrische Baugruppe vorgesehen, dass die Rastvorrichtung einen Rasthaken sowie eine zum Auslenken des Rasthakens bestimmte Rasthakenlasche umfasst. Des Weiteren ist der Rasthaken an einer Seitenfläche der Baugruppe, üblicherweise der Unterseite, mittels eines elastisch beweglichen Rasthakenstegs angelenkt. Aufgrund des elastisch beweglichen Rasthakenstegs ist der Rasthaken damit selbst elastisch beweglich und wird im Folgenden zur Unterscheidung von zumindest einem gegenüberliegend angeordneten starren Rasthaken als beweglicher Rasthaken bezeichnet. Die Rastvorrichtung weist des Weiteren Begrenzungsmittel auf, die eine Beweglichkeit der Rasthakenlasche beim Auslenken des Rasthakens begrenzen.

Die Rastvorrichtung der DE 20 2010 013 453 U1 weist einen Rasthaken, eine zum Auslenken des Rasthakens bestimmte und dort als Rastfuß bezeichnete Rasthakenlasche sowie zwei den Rastfuß haltende, elastisch bewegliche Rasthakenstege auf. Die Rastvorrichtung der DE 20 2010 013 453 U1 umfasst ferner in Form einer Anschlagfläche eines von dem Rastfuß unabhängigen Anschlags Begrenzungsmittel, welche eine Beweglichkeit des Rastfußes beim Auslenken des Rasthakens begrenzen. Einer der Rasthakenstege der Rastvorrichtung der DE 20 2010 013 453 U1 ist gegen eine Normale geneigt und die Richtung der Neigung ist von einer zu kontaktierenden Tragschiene abgewandt.

Bei der DE 20 2010 005 216 U1 fungiert als Rastvorrichtung ein federnder Rasthaken. Zum Fixieren einer mit einer solchen Rastvorrichtung ausgestatteten Baugruppe an einer Tragschiene wird diese einseitig an der Tragschiene eingehängt und durch anschließendes Verschwenken in Richtung auf die Tragschiene an dieser verrastet. Dabei wird der federnde Rasthaken beim Kontaktmit der Tragschiene im Rahmen seiner Materialelastizität ausgelenkt. Im vollständig verschwenkten Zustand der Baugruppe federt der Rasthaken zurück in seine Ursprungsposition und greift mit seiner hakenförmigen Kontur (Rastnase) unter einen Abschnitt der Tragschiene. Zum Abnehmen einer an einer Tragschiene verrasteten und mit einer derartigen Rastvorrichtung ausgestatteten Baugruppe wird der federnde Rasthaken mittels eines Werkzeugs, üblicherweise eines Schraubendrehers, ausgelenkt, so dass die Rastnase des Rasthakens außer Eingriff mit der Tragschiene kommt, woraufhin sich die Baugruppe von der Tragschiene entfernen lässt.

Die federnde Eigenschaft eines solchen Rasthakens ergibt sich aufgrund eines mit einem Gehäuse der jeweiligen Baugruppe verbundenen, insbesondere einstückig verbundenen Rasthakenstegs und dessen Materialeigenschaften. Üblicherweise sind Gehäuse der hier betroffenen Baugruppen aus einem Kunststoff gefertigt und entsprechend ist auch der als Anbindung des Rasthakens an das Gehäuse (Rasthakenanbindung) fungierende Rasthakensteg üblicherweise aus einem Kunststoff gefertigt. Im Rahmen der Materialeigenschaften des jeweils verwendeten Kunststoffs ergibt sich eine federnde Eigenschaft des Rasthakenstegs. Bei übermäßiger Kraftanwendung kann ein solcher Rasthakensteg allerdings durchaus ganz oder teilweise brechen, so dass bei einem abgerissenen Rasthakensteg keine Verrastung der jeweiligen Baugruppe an einer Tragschiene mehr möglich ist und bei einem teilweise gebrochenen oder überlasteten Rasthakensteg die federnde Eigenschaft oftmals so weit herabgesetzt ist, dass beim Aufschwenken der jeweiligen Baugruppe auf die Tragschiene der Rasthakensteg nicht mehr in eine Konfiguration zurückfedert, in welcher die am Ende des Rasthakens befindliche Rastnase sicher unter die Tragschiene greift.

Bei der hier vorgeschlagenen Rastvorrichtung ist der Rasthakensteg zumindest abschnittsweise geneigt. Die Neigung besteht gegenüber einer Normalen der jeweiligen Seitenfläche, von welcher der Rasthakensteg ausgeht, also üblicherweise gegenüber einer Normalen der Unterseite der Baugruppe. Die Richtung der Neigung ist dabei von dem Bereich zwischen dem beweglichen Rasthaken und zumindest einem gegenüberliegenden starren Rasthaken abgewandt. In diesem Bereich befindet sich bei einer aufgerasteten Baugruppe die Tragschiene. Diese Richtung der Neigung wird entsprechend im Folgenden kurz als eine von der Tragschiene abgewandte Neigung bezeichnet. Indem der Rasthakensteg zumindest abschnittsweise derart geneigt ist, ergibt sich eine bessere Belastbarkeit der Rastverbindung. Die verbesserte Belastbarkeit ist gegeben, weil sich bei einer Zugbelastung, welche auf eine an einer Tragschiene verrastete Baugruppe wirkt, der geneigte Rasthakensteg aufgrund der Zugbelastung mehr und mehr aufrichtet. Dieses Aufrichten führt zu einer verbesserten und belastbareren Verrastung der Baugruppe an der Tragschiene:
Bei bisherigen Rastvorrichtungen ist eine als Rasthakensteg auffassbare Verbindung zwischen dem Gehäuse der Baugruppe und dem beweglichen Rasthaken regelmäßig senkrecht zur Unterseite der Baugruppe ausgerichtet. Bei einer auf die Baugruppe wirkenden erheblichen Zugbelastung wird ein solcher Rasthakensteg gedehnt. Diese Dehnung ist innerhalb des Rasthakenstegs nicht gleichmäßig, sondern auf einer der Tragschiene oder dem oder jedem starren Rasthaken zugewandten Seite (derjenigen Seite, welcher die Rastnase am beweglichen Rasthaken zugewandt ist) am größten. Dies führt zu einer Deformation des Rasthakenstegs, welche einen Abstand zwischen der Rastnase am beweglichen Rasthaken und einer entsprechenden Rastkontur an dem oder jedem gegenüberliegenden starren Rasthaken vergrößert, so dass die Rastnase des beweglichen Rasthakens schließlich außer Eingriff mit der Tragschiene kommt. Dann besteht die Verrastung der Baugruppe an der Tragschiene nicht mehr. Bei dem geneigten Rasthakensteg gemäß der hier vorgeschlagenen Ausführungsform der Rastvorrichtung mit der von der Tragschiene abgewandten Neigung führt eine auf die Baugruppe wirkende erhebliche Zugbelastung möglicherweise ebenfalls zu einer Dehnung des Rasthakenstegs, aber zumindest auch zu einem Aufrichten des Rasthakenstegs aus der zuvor geneigten Orientierung. In der unbelasteten geneigten Ausrichtung ist ein Abstand zwischen der Rastnase des beweglichen Rasthakens und einer entsprechenden Rastkontur an dem oder jedem gegenüberliegenden starren Rasthaken auf die Breite der Tragschiene abgestimmt. Beim Aufrichten des Rasthakenstegs wird dieser an die Tragschiene gepresst. Zunehmende Zugbelastung führt also gerade dazu, dass der Rasthaken immer stärker seitlich an die Tragschiene gepresst wird, so dass sich die Rastnase unter der Tragschiene gewissermaßen verkrallt und die Rastnase gerade nicht außer Eingriff mit der Tragschiene kommt.

Im Ergebnis ist die Fixierung der jeweiligen Baugruppe im verrasteten Zustand an der Tragschiene damit deutlich belastbarer, und zwar belastbarer gegen Rüttelbelastungen, auch außergewöhnliche Rüttelbelastungen, sowie belastbarer gegen unsachgemäße Versuche, die Verrastung der Baugruppe an der Tragschiene zu lösen.

Der Vorteil der hier vorgeschlagenen Rastvorrichtung besteht weiterhin darin, dass eine zum Auslenken des Rasthakens bestimmte Rasthakenlasche durch Begrenzungsmittel geführt wird und dass diese Führung der Rasthakenlasche eine Beweglichkeit der Rasthakenlasche beim Auslenken des Rasthakens begrenzt und damit auch eine Beweglichkeit des Rasthakens insgesamt begrenzt.

Die Begrenzung der Beweglichkeit des Rasthakens bewirkt, dass der Rasthaken auch bei übermäßiger Kraftanwendung nicht beschädigt oder gar abgerissen werden kann. Die Begrenzung der Beweglichkeit des Rasthakens bewirkt zudem, dass der Rasthakensteg beim Auslenken des Rasthakens nicht überbeansprucht (überdehnt) wird und dieser damit die im Rahmen der jeweiligen Materialeigenschaften gegebene Elastizität auch nach einer Vielzahl von Rastvorgängen sowie einer jeweils anschließenden Lösung der Rastverbindung behält. Dabei ist die Rastvorrichtung kostengünstig, denn sie kann aus dem Werkstoff des Gehäuses der jeweiligen Baugruppe gefertigt und einstückig mit dem Gehäuse verbunden sein. Die Rastvorrichtung ist bei einer solchen Ausführungsform integraler Bestandteil des Gehäuses der jeweiligen Baugruppe und erfordert beim Herstellen der jeweiligen Baugruppe keinen zusätzlichen Montageschritt.

Vorteilhafte Ausgestaltungen der Rastvorrichtung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer weiteren Ausführungsform der Rastvorrichtung fungiert als Begrenzungsmittel zumindest eine quer zu einer Längserstreckung der Rasthakenlasche orientierte Anschlagsrippe. Die Anschlagsrippe bewirkt, dass die Rasthakenlasche nur bis zum Anschlag an der Anschlagsrippe beweglich ist. Diese Beschränkung der Beweglichkeit der Rasthakenlasche bewirkt eine Beschränkung der Auslenkbarkeit des Rasthakens und des Rasthakenstegs. Die zumindest eine Anschlagrippe ist demnach ein Beispiel für eine Beschränkung der Beweglichkeit des elastisch verformbaren Rasthakenstegs, welche gewährleistet, dass der Rasthakensteg weder abgerissen werden kann noch derart überbeansprucht werden kann, dass dessen elastische Verformbarkeit und damit dessen federnde Eigenschaft verlorengeht. Die Anschlagrippe kann Teil der Rasthakenlasche sein und an einer dafür vorgesehenen Kontur an der Unterseite der jeweiligen Baugruppe anschlagen. Alternativ kann die Anschlagsrippe auch Teil der Kontur der Unterseite der jeweiligen Baugruppe sein und in eine Ausnehmung in der Rasthakenlasche eingreifen und zur Begrenzung von dessen Beweglichkeit an einer Seitenfläche dieser Ausnehmung anschlagen.

Bei einer weiteren oder alternativen Ausführungsform der Rastvorrichtung fungieren als Begrenzungsmittel zumindest ein Paar Führungsrippen, welche ober- und unterhalb einer durch die Rasthakenlasche definierten Ebene platziert sind. Die Führungsrippen gewährleisten, dass die Rasthakenlasche beim Auslenken des Rasthakens in einer durch die Position der Führungsrippen definierten Ebene geführt wird. Indem die Führungsrippen selbst ober- und unterhalb der durch die Rasthakenlasche definierten Ebene angebracht sind, verbleibt die Rasthakenlasche beim Auslenken des Rasthakens stets in derselben oder zumindest im Wesentlichen in derselben Ebene. Damit kann die Rasthakenlasche beim Auslenken des Rasthakens nicht aus der für eine translatorische Bewegung der Rasthakenlasche vorgesehenen Ebene verschwenkt und zum Beispiel nicht hochgeklappt und damit verbogen oder abgebrochen werden. Auf diese Weise ist gewährleistet, dass die Rasthakenlasche auch beim mehrfachen Lösen der Rastverbindung nicht beschädigt wird und somit ebenfalls gewährleistet, dass die Rastvorrichtung insgesamt dauerhaft verwendbar bleibt. Darüber hinaus erleichtert die Fixierung der Rasthakenlasche in der durch die Führungsrippen definierten Ebene die Bedienung der Rastvorrichtung beim Auflösen der Rastverbindung, denn aufgrund der Führungsrippen befindet sich die Rasthakenlasche immer leicht oberhalb von zum Beispiel einer Montageplatte oder dergleichen, auf welcher die jeweilige Tragschiene montiert ist, an welcher die Baugruppe verrastet ist. Dort kann die Rasthakenlasche mit einem Werkzeug, zum Beispiel einem Schraubendreher, leicht erfasst werden, zum Beispiel indem die Klinge des Schraubendrehers in eine dafür vorgesehene Ausnehmung am freien Ende der Rasthakenlasche eingeführt wird. Ohne die Fixierung der Rasthakenlasche in der durch die Führungsrippen definierten Ebene kann die Rasthakenlasche nach mehreren Betätigungsvorgängen gewissermaßen nach oben geklappt (von einer eventuellen Montageplatte weg) oder nach unten gedrückt sein und im nach unten gedrückten Zustand auf der Montageplatte aufliegen. Dort kann die Klinge des Schraubendrehers nur bis zum Kontakt mit der Montageplatte in die Ausnehmung am Ende der Rasthakenlasche eingeführt werden. Dies erhöht die Gefahr, dass die Klinge des Schraubendrehers beim Bewegen der Rasthakenlasche abrutscht. Zudem kann durch den Kontakt der Klinge des Schraubendrehers mit der Montageplatte diese verkratzen.

Erfindungsgemäß weist die Rasthakenlasche entlang ihrer Längserstreckung einen materialreduzierten Abschnitt auf. In dem materialreduzierten Abschnitt ist die Rasthakenlasche dünner als seitlich neben dem materialreduzierten Abschnitt. Der materialreduzierte Abschnitt gewährleistet in diesem Bereich eine elastische Beweglichkeit der Rasthakenlasche quer zu dessen Längserstreckung. Beim Auslenken des Rasthakens findet nicht nur eine elastische Verformung des Rasthakens im Bereich von dessen Rasthakensteg, sondern auch eine elastische Verformung der Rasthakenlasche im Bereich von deren materialreduziertem Abschnitt statt. Damit kann die Rasthakenlasche der beim Betätigen der Rasthakenlasche ausgelösten Schwenkbewegung des Rasthakenstegs optimal folgen, indem die Rasthakenlasche in dem materialreduzierten Abschnitt mehr und mehr abknickt, je mehr der Rasthakensteg verschwenkt wird. Der an den materialreduzierten Abschnitt bis zum freien Ende der Rasthakenlasche anschließende Teil bleibt dabei in seiner vorgesehenen horizontalen oder im Wesentlichen horizontalen Ausrichtung.

Eine solche horizontale oder im Wesentlichen horizontale Ausrichtung der Rasthakenlasche lässt sich besonders gut gewährleisten, wenn sich der materialreduzierte Abschnitt der Rasthakenlasche zwischen dem Rasthaken und dem Begrenzungsmittel oder einem Begrenzungsmittel befindet.

Insgesamt ist die hier vorgeschlagene Neuerung auch eine elektrische Baugruppe der eingangs genannten Art mit einer Rastvorrichtung wie hier und im Folgenden beschrieben.

Nachfolgend wird ein Ausführungsbeispiel der erfindungsgemäßen Rastvorrichtung anhand der Zeichnung näher erläutert. Einander entsprechende Gegenstände oder Elemente sind in allen Figuren mit den gleichen Bezugszeichen versehen.

Es zeigen
- Fig. 1: eine zum Aufrasten auf eine Tragschiene vorgesehene elektrische Baugruppe in perspektivischer Ansicht,
- Fig. 2: die Baugruppe gemäß Fig. 1 in einer Seitenansicht,
- Fig. 3A, 3B: eine Unterseite der Baugruppe gemäß Fig. 1 und Fig. 2 mit einem dort zum Aufrasten der Baugruppe auf einer Tragschiene gebildeten Rastprofil,
- Fig. 4A, 4B: eine Ausschnittsvergrößerung aus der Darstellung in Fig. 1,
- Fig. 5A, 5B: eine vergrößerte Darstellung der Unterseite der Baugruppe in perspektivischer Ansicht und
- Fig. 6: einen Schnitt durch die Baugruppe gemäß Fig. 1 und Fig. 2 in einer Seitenansicht im an einer Tragschiene aufgerasteten Zustand sowie
- Fig. 7: einen Ausschnitt aus der Darstellung in Fig. 6.

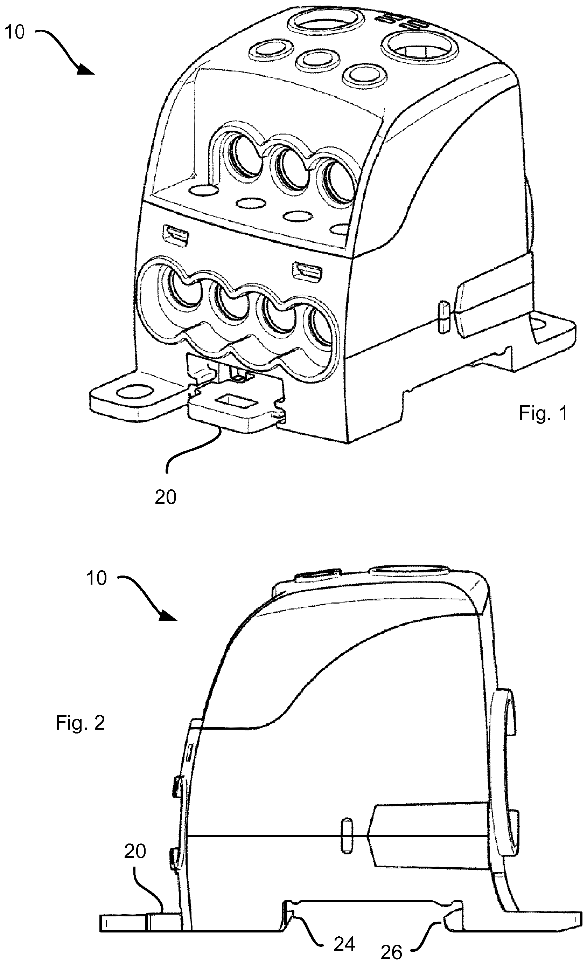

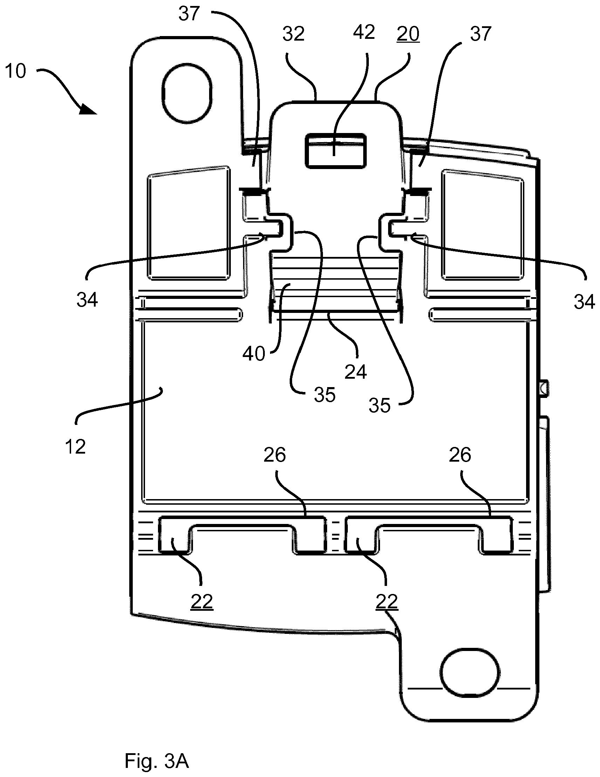

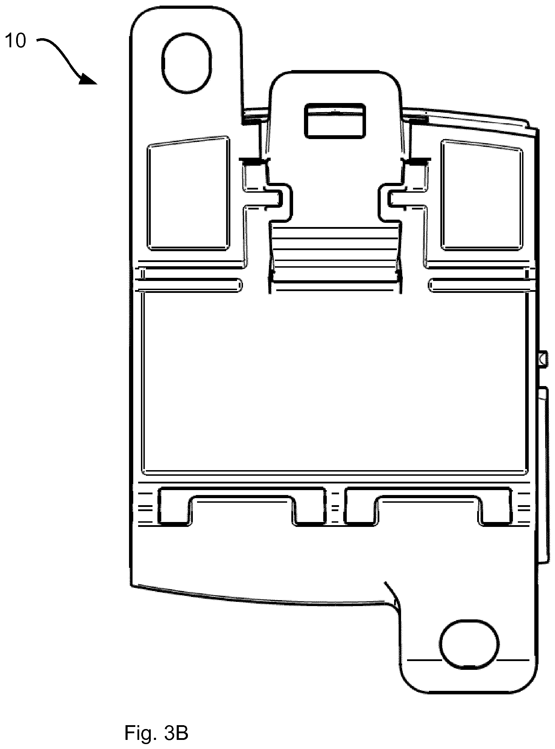

Die Darstellungen in Figur 1 und Figur 2 zeigen als Beispiel für eine elektrische Baugruppe 10 der hier in Rede stehenden Art einen Verteilerblock/eine Verteilerklemme ähnlich der in der DE 20 2010 005 216 U1 beschriebenen Verteilerklemme. Die Darstellungen in Figur 3A, 4A und 5A entsprechen den Darstellungen in Figur 3B, 4B und 5B, wobei in den Darstellungen in Figur 3B, 4B und 5B zur besseren Übersicht die Bezugslinien und Bezugsziffern weggelassen sind.

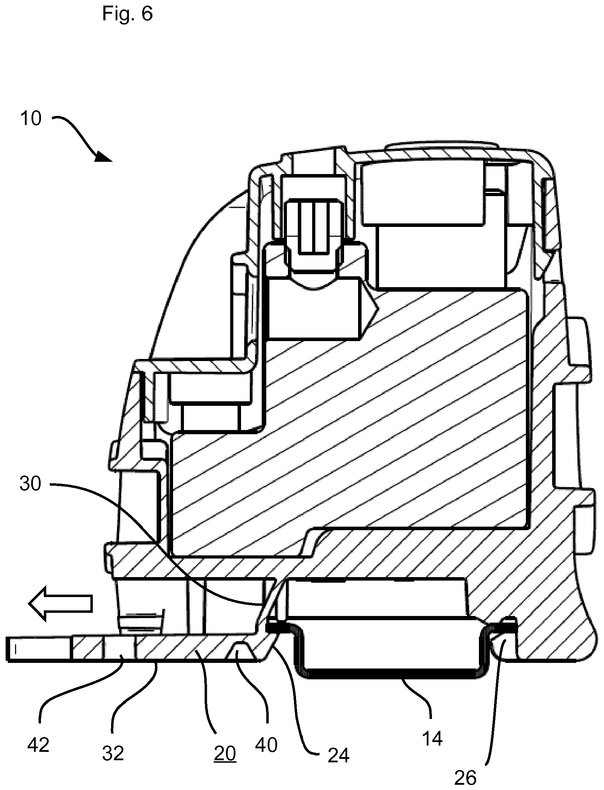

Die Darstellung in Figur 3A, 3B zeigt eine Unterseite 12 der Baugruppe 10 gemäß Figur 1 und Figur 2. Die Baugruppe 10 ist zum Aufrasten auf eine Tragschiene 14 (Fig. 6) vorgesehen. Zu diesem Zweck ist die Unterseite 12 der Baugruppe 10 entsprechend ausgestaltet und weist eine Rastvorrichtung in Form von zumindest einem beweglichen Rasthaken 20 und zumindest einem starren Rasthaken 22 auf. Der bewegliche Rasthaken 20 und der oder jeder starre Rasthaken 22 sind an der Unterseite 12 der Baugruppe 10 gegenüberliegend und einander zugewandt platziert. Ein Abstand zwischen dem beweglichen Rasthaken 20 und dem oder jedem starren Rasthaken 22 ist auf eine Breite der Tragschiene 14 abgestellt.

In den Figuren ist eine Ausführungsform einer Rastvorrichtung 20, 22 mit genau einem beweglichen Rasthaken 20 und genau zwei starren Rasthaken 22 gezeigt. Auf dieser Basis, allerdings ohne Verzicht auf eine weitergehende Allgemeingültigkeit, wird die nachfolgende Beschreibung fortgesetzt. Entsprechend ist eine Ausführungsform mit mehr oder weniger als zwei starren Rasthaken 22 oder mehr als einem beweglichen Rasthaken 20 stets mitzulesen. Grundsätzlich kommt zum Beispiel auch eine Ausführungsform mit zwei einander gegenüberliegenden beweglichen Rasthaken 20 in Betracht. Auch dies ist im Folgenden stets mitzulesen.

In der isometrischen Ansicht der Baugruppe 10 gemäß Figur 1 ist der bewegliche Rasthaken 20 am Fuß einer von zwei einander gegenüberliegenden Anschlussseiten der Baugruppe 10 erkennbar. In der in Figur 2 gezeigten Seitenansicht sind auf einer Seite der Baugruppe 10 der bewegliche Rasthaken 20 und eine Rastnase 24 des beweglichen Rasthakens 20 sowie eine Haltenase 26 eines der gegenüberliegenden starren Rasthaken 22 erkennbar. Die einander gegenüberliegende Anordnung des beweglichen Rasthakens 20 und der beiden starren Rasthaken 22 ist auch in der Darstellung der Unterseite 12 der Baugruppe 10 gut erkennbar. Dort wird auch offenbar, dass die Rastnase 24 des beweglichen Rasthakens 20 und die Haltenasen 26 der beiden starren Rasthaken 22 einander zugewandt sind. In dem dazwischen verbleibenden freien Bereich wird die Tragschiene 14 aufgenommen.

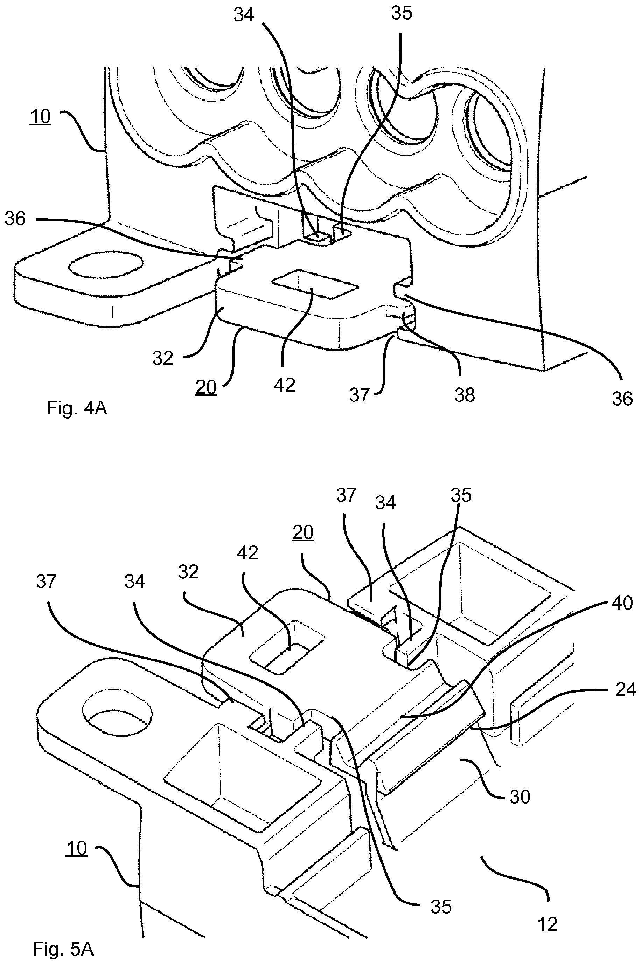

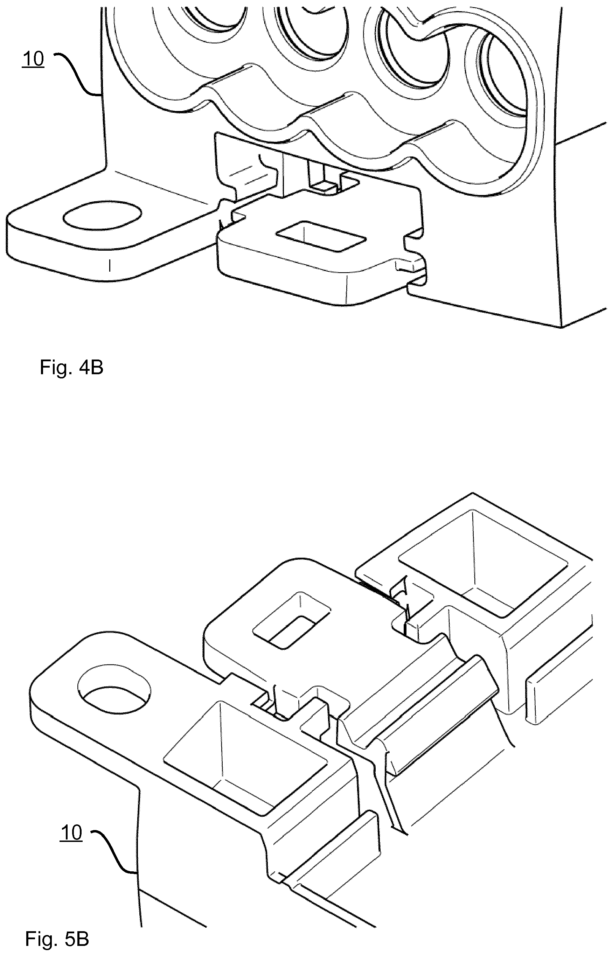

Die nachfolgenden Ausführungen befassen sich mit dem von der Rastvorrichtung 20, 22 umfassten beweglichen Rasthaken 20. Dafür wird auf die in Figur 4A, 4B gezeigte Ausschnittsvergrößerung aus der Darstellung in Figur 1 sowie eine vergrößerte perspektivische Darstellung der Unterseite 12 der Baugruppe 10 in Figur 5A, 5B verwiesen.

Speziell in der Darstellung in Figur 5A, 5B ist gut erkennbar, dass der bewegliche Rasthaken 20 mittels eines elastisch beweglichen Rasthakenstegs 30 an der Unterseite 12 der Baugruppe 10 angelenkt ist. An den Rasthakensteg 30 schließt sich die Rastnase 24 an und an diese eine zum Auslenken des beweglichen Rasthakens 20 bestimmte Rasthakenlasche 32.

Zur Begrenzung einer Beweglichkeit der Rasthakenlasche 32 beim Auslenken des beweglichen Rasthakens 20 sind Begrenzungsmittel 34, 35, 36, 37, 38 vorgesehen.

Bei der gezeigten Ausführungsform der Rastvorrichtung 20, 22 (siehe auch Fig: 3) handelt es sich bei den Begrenzungsmitteln 34-38 zum einen um zumindest eine quer zu einer Längserstreckung der Rasthakenlasche orientierte Anschlagsrippe 34. Bei der gezeigten Ausführungsform sind zwei einander gegenüberliegend platzierte Anschlagsrippen 34 Teil einer Kontur der Unterseite 12 der Baugruppe 10. Die Rasthakenlasche 32 befindet sich zwischen diesen Anschlagsrippen 34 und weist Ausnehmungen 35 auf, in welche die Anschlagsrippen 34 eingreifen, so dass jeweils eine der Seitenflächen dieser Ausnehmungen 35 ab einer bestimmten mittels einer Bewegung der Rasthakenlasche 32 veranlassten Auslenkung des beweglichen Rasthakens 20 an den Anschlagsrippen 34 anschlägt. Eine weitere Bewegung der Rasthakenlasche 32 ist dann nicht mehr möglich. Entsprechend kann dann auch der bewegliche Rasthaken 20 nicht weiter ausgelenkt werden. Insofern beschränkt die Beweglichkeit der Rasthakenlasche 32 die mögliche Auslenkung des beweglichen Rasthakens 20 insgesamt. Wie bereits im allgemeinen Beschreibungsteil ausgeführt, kann die Position der Anschlagsrippe 34 und der Ausnehmungen 35 im Sinne einer kinematischen Umkehr auch derart vertauscht sein, dass die Rasthakenlasche 32 die Anschlagsrippe 34 und die Kontur auf der Unterseite 12 der Baugruppe 10 die Ausnehmungen 35 aufweist.

Neben den Begrenzungsmitteln in Form der Anschlagsrippe 34 und der Ausnehmungen 35 umfasst die gezeigte Ausführungsform der Rastvorrichtung 20, 22 zumindest ein Paar Führungsrippen 36, 37, welche ober- und unterhalb einer durch die Rasthakenlasche 32 definierten Ebene platziert sind. Die Führungsrippen 36, 37 sind parallel zur Längserstreckung der Rasthakenlasche 32 ausgerichtet und fassen einen Abschnitt der Rasthakenlasche 32, hier eine ebenfalls parallel zur Längserstreckung der Rasthakenlasche 32 orientierte seitliche Abstellung 38 an der Rasthakenlasche 32, ein. Die Führungsrippen 36, 37 sind Teil einer Kontur der Unterseite 12 der Baugruppe 10. Wie zuvor bezüglich der Anschlagsrippe 34 und der zur Aufnahme der Anschlagsrippe 34 bestimmten Ausnehmung 35 erläutert, ist auch bei den als Begrenzungsmittel fungierenden Führungsrippen 36, 37 sowie gegebenenfalls einer Abstellung 38 im Sinne einer kinematischen Umkehr eine Zuordnung der Abstellung 38 zur Unterseite 12 der Baugruppe 10 sowie eine Zuordnung der Führungsrippen 36, 37 zur Rasthakenlasche 32 möglich. Die Führungsrippen 36, 37 bewirken eine Führung der Rasthakenlasche 32 in der durch die Position und Orientierung der Führungsrippen 36, 37 definierten Ebene, beim gezeigten Ausführungsbeispiel in einer Ebene parallel zu einer Ebene einer Montageplatte, an welcher die Tragschiene 14 angebracht ist und auf welcher wiederum die Baugruppe 10 aufgerastet wird. Mittels der Führung der Rasthakenlasche 32 in der durch die Führungsrippen 36, 37 definierten Ebene ist gewährleistet, dass die Rasthakenlasche 32 - kurz gefasst - nicht umgebogen werden kann. Diese Führung der Rasthakenlasche 32 schützt auch den beweglichen Rasthaken 20 und dessen Rasthakensteg 30 vor Beschädigungen.

Bei der in den Figuren gezeigten Ausführungsform weist die Rasthakenlasche 32 des beweglichen Rasthakens 20 zwischen dem Rasthaken 20 einerseits und der als Begrenzungsmittel fungierenden Ausnehmung 35 andererseits einen materialreduzierten Abschnitt 40 auf. Im Bereich des materialreduzierten Abschnitts 40 ergibt sich eine erhöhte elastische Verformbarkeit der Rasthakenlasche 32 in einer Art und Weise, wie dies grundsätzlich zum Beispiel bei einem Filmscharnier der Fall ist. Aufgrund dieser elastischen Verformbarkeit ist eine rein translatorische Bewegung der Rasthakenlasche 32 zwischen den Führungsrippen 36, 37 beim Auslenken des beweglichen Rasthakens 20 zum Auflösen einer Verrastung der Baugruppe 10 an einer Tragschiene 14 möglich.

Die Darstellung in Figur 6 zeigt die Baugruppe 10 gemäß der vorangehend erläuterten Figuren in einer quergeschnittenen Seitenansicht und in einem auf einer Tragschiene 14 in Form einer Hutschiene aufgerasteten Zustand. Das Profil der Tragschiene 14 wird in grundsätzlich an sich bekannter Art und Weise auf der einen Seite durch die Haltenasen 26 der beiden starren Rasthaken 22 und auf der gegenüberliegenden Seite durch die Rastnase 24 des beweglichen Rasthakens 20 umfasst. Zum Auflösen der Verrastung wird die Rasthakenlasche 32 in der durch den Blockpfeil angedeuteten Richtung bewegt. Dies erfolgt beispielsweise, indem ein Werkzeug, insbesondere eine Klinge eines Schraubendrehers (nicht gezeigt), in eine Öffnung 42 am freien Ende der Rasthakenlasche 32 eingeführt wird. Die resultierende Bewegung der Rasthakenlasche 32 ist aufgrund der als Begrenzungsmittel fungierenden Führungsrippen 36, 37 eine rein translatorische Bewegung.

Die translatorische Bewegung der Rasthakenlasche 32 führt zu einem Verschwenken des beweglichen Rasthakens 20, so dass schließlich die Rastnase 24 außer Eingriff mit der Tragschiene 14 kommt und somit die Verrastung der Baugruppe 10 an der Tragschiene 14 aufgehoben ist. Die translatorische Beweglichkeit der Rasthakenlasche 32 ist dabei durch die Anschlagsrippen 34 und die diese auf Seiten der Rasthakenlasche 32 einfassenden Ausnehmungen 35 begrenzt, so dass auch der Umfang der Auslenkung des beweglichen Rasthakens 20 und damit die beim Auslenken des beweglichen Rasthakens 20 resultierende Dehnung des Materials des Rasthakenstegs 30 begrenzt ist. Dies schützt den beweglichen Rasthaken 20 selbst bei übermäßiger Kraftanwendung, so dass die damit gebildete Rastvorrichtung 20, 22 dauerhaft belastbar und dauerhaft verwendbar ist.

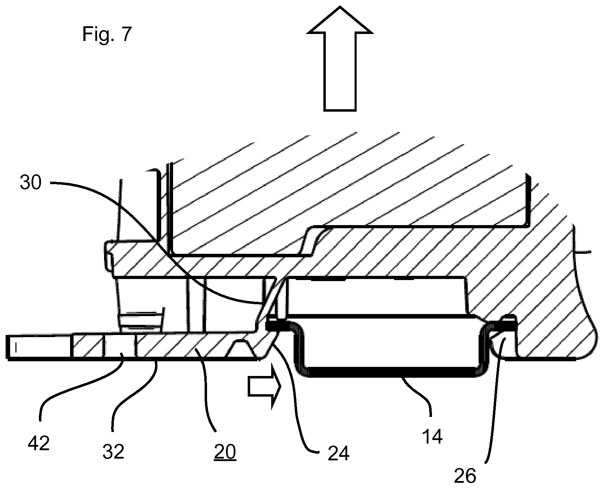

In den Darstellungen in Figur 5 und Figur 6 ist auch die zumindest abschnittsweise Neigung des Rasthakenstegs 30 gegen eine Normale der Unterseite 12 der Baugruppe 10 erkennbar. Bei einer auf die Baugruppe 10 wirkenden Rüttel- oder Zugbelastung führt diese Neigung zu der im allgemeinen Beschreibungsteil erläuterten verbesserten Belastbarkeit der Rastverbindung, wie dies in der abschließenden Darstellung in Figur 7 veranschaulicht ist. Eine auf die Baugruppe 10 wirkende Zugbelastung (Zugkraft), zum Beispiel aufgrund eines unsachgemäßen Versuchs, die Verrastung der Baugruppe 10 an der Tragschiene 14 zu lösen, oder aufgrund von Rüttelbelastungen oder dergleichen, ist in der Darstellung in Figur 7 durch den aufwärtsgewandten Blockpfeil veranschaulicht. Aufgrund einer solchen Zugbelastung richtet sich der Rasthakensteg 30 aus seiner geneigten Position mehr und mehr in eine senkrechte Position auf. Dies führt dazu, dass der Rasthakensteg 30 und die an dessen Ende befindliche Rastnase 24 noch stärker an die angrenzende Struktur der Tragschiene 14 gepresst werden. Dieses Anpressen an die Tragschiene 14 ist als Ergebnis einer Zerlegung einer der Zugkraft entgegenwirkenden und der Zugkraft betragsmäßig entsprechenden Haltekraft erklärbar: Aufgrund der geneigten Position des Rasthakenstegs 30 schließen die Richtung der Haltekraft und der Rasthakensteg 30 einen Winkel ein. Die Haltekraft kann demgemäß als aus einer ersten und einer zweiten Kraftkomponente zusammengesetzt dargestellt werden. Die erste Kraftkomponente wirkt entlang der Längserstreckung des geneigten Rasthakenstegs 30. Die zweite Kraftkomponente ergänzt in einem Kräfteparallelogramm die erste Kraftkomponente nach Betrag und Richtung zur insgesamt wirkenden Haltekraft. Diese zweite Kraftkomponente bewirkt das Anpressen des Rasthakenstegs 30 an die Tragschiene 14 und das Verkrallen der Rastnase 24 an der Unterseite der Tragschiene 14. Dies ist durch den nach rechts gewandten Blockpfeil im Bereich der Rastnase 24 gezeigt.

Damit lässt sich die hier vorgelegte Beschreibung kurz wie folgt zusammenfassen: Es wird eine Rastvorrichtung 20, 22 für eine elektrische Baugruppe 10 angegeben, wobei die Rastvorrichtung 20, 22 einen an der Baugruppe 10 mittels eines elastisch beweglichen Rasthakenstegs 30 angelenkten beweglichen Rasthaken 20 und eine zum Auslenken des beweglichen Rasthakens 20 bestimmte Rasthakenlasche 32 umfasst, und wobei Begrenzungsmittel 34, 35, 36, 37, 38 eine Beweglichkeit der Rasthakenlasche 32 beim Auslenken des beweglichen Rasthakens 20 begrenzen.

### Bezugszeichenliste

- 10: elektrische Baugruppe
- 12: Unterseite
- 14: Tragschiene
- 16, 18: (frei)
- 20: Rastvorrichtung, beweglicher Rasthaken
- 22: Rastvorrichtung, starrer Rasthaken
- 24: Rastnase
- 26: Haltenase
- 28: (frei)
- 30: Rasthakensteg
- 32: Rasthakenlasche
- 34: Begrenzungsmittel, Anschlagsrippe
- 35: Begrenzungsmittel, Ausnehmung
- 36: Begrenzungsmittel, (obere) Führungsrippe
- 37: Begrenzungsmittel, (untere) Führungsrippe
- 38: Begrenzungsmittel, Abstellung
- 40: materialreduzierter Abschnitt
- 42: Öffnung

## Patentansprüche

1. Rastvorrichtung (20, 22) für eine elektrische Baugruppe (10),
wobei die Rastvorrichtung (20, 22) einen an der Baugruppe (10) mittels eines elastisch beweglichen Rasthakenstegs (30) angelenkten Rasthaken (20) und eine zum Auslenken des Rasthakens (20) bestimmte Rasthakenlasche (32) umfasst,
wobei Begrenzungsmittel (34, 35, 36, 37, 38) eine Beweglichkeit der Rasthakenlasche (32) beim Auslenken des Rasthakens (20) begrenzen,
wobei der Rasthakensteg (30) zumindest abschnittsweise gegen eine Normale geneigt ist,
wobei eine Richtung der Neigung des Rasthakenstegs (30) von einer mittels der Rastvorrichtung (20, 22) kontaktierbaren Tragschiene (14) sowie einem Bereich zwischen dem beweglichen Rasthaken (20) und zumindest einem gegenüberliegenden starren Rasthaken (22) abgewandt ist,
so dass zunehmende Zugbelastung des Rasthakenstegs (30) dazu führt, dass der Rasthaken (20) immer stärker seitlich an die Tragschiene (14) gepresst wird,
**dadurch gekennzeichnet,**
**dass** die Rasthakenlasche (32) zwischen dem Rasthaken (20) und dem oder einem Begrenzungsmittel (34, 35, 36, 37, 38) einen materialreduzierten Abschnitt (40) aufweist,
**dass** der materialreduzierte Abschnitt (40) eine elastische Beweglichkeit der Rasthakenlasche (32) quer zu deren Längserstreckung gewährleistet.

2. Rastvorrichtung (20, 22) nach Anspruch 1, wobei als Begrenzungsmittel (34, 35, 36, 37, 38) zumindest eine quer zu einer Längserstreckung der Rasthakenlasche (32) orientierte Anschlagsrippe (34) fungiert.

3. Rastvorrichtung (20, 22) nach einem der vorangehenden Ansprüche, wobei als Begrenzungsmittel (34, 35, 36, 37, 38) zumindest ein Paar ober- und unterhalb einer durch die Rasthakenlasche (32) definierten Ebene platzierte Führungsrippen (36, 37) fungieren.

4. Elektrische Baugruppe (10) mit einer Rastvorrichtung (20, 22) nach einem der vorangehenden Ansprüche.

## Claims

1. Locking mechanism (20, 22) for an electrical assembly (10),
the locking mechanism (20, 22) comprising a locking hook (20) articulated on the assembly (10) by means of a resiliently movable locking hook web (30) and a locking hook bracket (32) for deflecting the locking hook (20),
wherein limiting means (34, 35, 36, 37, 38) limit a movability of the locking hook bracket (32) when the locking hook (20) is deflected,
wherein the locking hook web (30) is inclined at least in portions toward a normal, a direction of the inclination of the locking hook web (30) facing away from a support rail (14), which can be contacted by means of the locking mechanism (20, 22), and from a region between the movable locking hook (20) and at least one opposing rigid locking hook (22), so that increasing tensile loading of the locking hook web (30) leads to the locking hook (20) being pressed laterally against the support rail (14) increasingly strongly,
**characterized**
**in that** the locking hook bracket (32) has a material-reduced portion (40) between the locking hook (20) and the or a limiting means (34, 35, 36, 37, 38), and
**in that** the material-reduced portion (40) ensures a resilient movability of the locking hook bracket (32) transversely to the longitudinal extension thereof.

2. Locking mechanism (20, 22) according to claim 1,
wherein at least one stop rib (34) oriented transversely to a longitudinal extension of the locking hook bracket (32) acts as limiting means (34, 35, 36, 37, 38).

3. Locking mechanism (20, 22) according to either of the preceding claims,
wherein at least one pair of guide ribs (36, 37) placed above and below a plane defined by the locking hook bracket (32) act as limiting means (34, 35, 36, 37, 38).

4. Electrical assembly (10) comprising a locking mechanism (20, 22) according to any of the preceding claims.

## Revendications

1. Dispositif d'encliquetage (20, 22) destiné à un bloc électrique (10),
le dispositif d'encliquetage (20, 22) comprenant un crochet d'encliquetage (20) articulé sur le bloc (10) au moyen d'une bride de crochet d'encliquetage (30) mobile élastiquement et une patte de crochet d'encliquetage (32) conçue pour dévier le crochet d'encliquetage (20),
dans lequel des moyens de limitation (34, 35, 36, 37, 38) limitent une mobilité de la patte de crochet d'encliquetage (32) lorsque le crochet d'encliquetage (20) est dévié,
dans lequel la bride de crochet d'encliquetage (30) est inclinée au moins sur certaines sections par rapport à une normale, une direction de l'inclinaison de la bride de crochet d'encliquetage (30) étant détournée d'un rail de support (14) pouvant être mis en contact au moyen du dispositif d'encliquetage (20, 22) ainsi que d'une zone entre le crochet d'encliquetage mobile (20) et au moins un crochet d'encliquetage (22) rigide opposé, de telle sorte que l'augmentation de la contrainte de traction sur la bride de crochet d'encliquetage (30) amène le crochet d'encliquetage (20) à être pressé de plus en plus latéralement sur le rail de support (14),
**caractérisé en ce**
**que** la patte de crochet d'encliquetage (32) comporte une section réduite en matériau (40) entre le crochet d'encliquetage (20) et le ou un moyen de limitation (34, 35, 36, 37, 38),
**que** la section réduite en matériau (40) assure une mobilité élastique de la patte de crochet d'encliquetage (32) transversalement à son étendue longitudinale.

2. Dispositif d'encliquetage (20, 22) selon la revendication 1, dans lequel au moins une nervure d'arrêt (34) orientée transversalement à une extension longitudinale de la patte de crochet d'encliquetage (32) sert de moyen de limitation (34, 35, 36, 37, 38).

3. Dispositif d'encliquetage (20, 22) selon l'une des revendications précédentes, dans lequel au moins une paire de nervures de guidage (36, 37) placées au-dessus et au-dessous d'un plan défini par la patte de crochet d'encliquetage (32) servent de moyens de limitation (34, 35, 36, 37, 38).

4. Bloc électrique (10) comportant un dispositif d'encliquetage (20, 22) selon l'une des revendications précédentes.
